# EUROPEAN PATENT SPECIFICATION

(11) **EP 0 806 571 B1**
(45) Date of publication and mention of the grant of the patent: **13.10.1999**
(21) Application number: 96202491.5
(22) Date of filing: 07.09.1996
(51) Int. Cl.: F04D 29/04, F04D 19/04

(54) **A rotatable assembly for supporting the rotor of a vacuum pump**
Rotierende Anordnung zur Lagerung des Rotors einer Vakuumpumpe
Assemblage rotatif pour supporter le rotor d'une pompe à vide

(30) Priority: 09.05.1996 IT TO960380
(43) Date of publication of application: 12.11.1997
(73) Proprietor: VARIAN S.p.A., I-10040 Leini (Torino) (IT)
(72) Inventor: Casaro, Fausto, 10141 Turin (IT)
(74) Representative: Robba, Eugenio

(56) References cited:
- EP-A- 0 333 200
- US-A- 3 168 978
- US-A- 4 023 920
- US-A- 5 033 936

## Description

The present invention is directed to a bearing assembly for rotatably supporting the rotor of a vacuum pump.

More particularly the invention is concerned with a bearing assembly for supporting the shaft of a rotor in a vacuum pump of the turbomolecular type.

As it is known a vacuum pump is substantially formed by an outer case housing a number of gas pumping stages.

The gas pumping stages generally comprise a plurality of stator rings integral with the pump body and cooperating with a plurality of rotor disks integrally mounted on a rotatable shaft rotated by the pump motor. The pumping stages provide a region for the gas passage, known as pumping channel, in which the surfaces of a rotor disk and of the corresponding stator disk are relatively spaced apart, and high tightness zones in which the surface of a rotor and that of the corresponding stator disk are very near to each other.

The rotor disks can be either flat disks or disks provided with a number of tilted and closely spaced vanes.

A vacuum pump of the turbomolecular type comprises both flat disks and disks equipped with vanes and is capable to achieve vacuum levels in the order of 10⁻⁸ Pa.

In order to reach such vacuum levels, in the presently employed pumps the rotor has to be driven at speeds near to 100.000 rpm and anyhow not lower than 25.000 rpm.

An example of vacuum pump of turbomolecular type is disclosed in EP-A-0 445 855 filed by the present applicant.

It is further well known using bearings for rotatably supporting the shaft of the rotor in a vacuum pump.

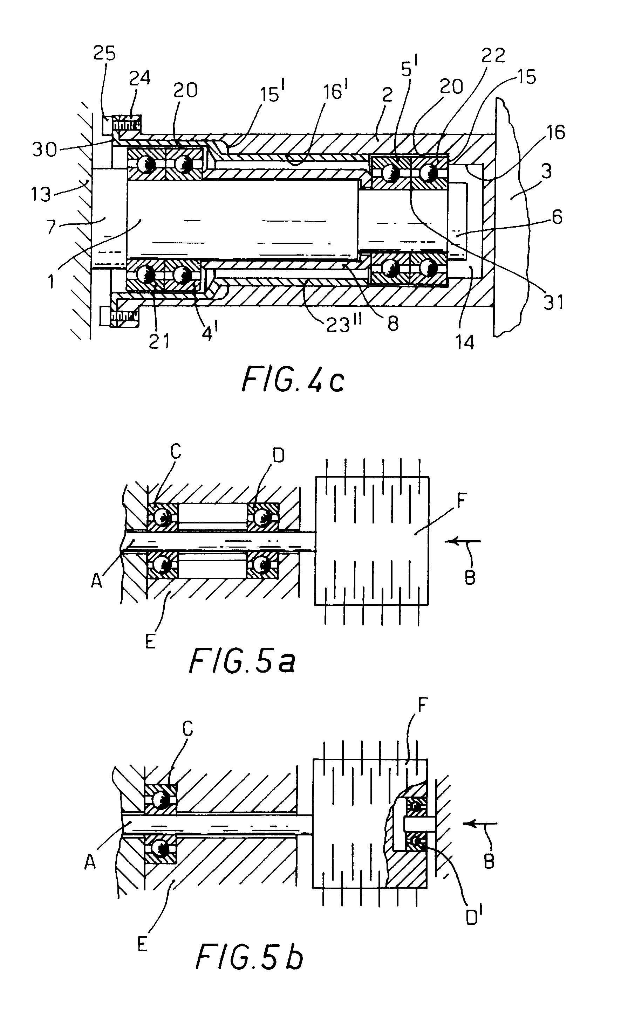

With reference to Figures 5a, that schematically illustrates an arrangement according to the known art, the shaft A of a vacuum pump is rotatably supported through a pair of rotatable supports or bearings C and D, for example ball bearings, disposed between the shaft A and the body E of the vacuum pump.

Figure 5a illustrates a first embodiment of the prior art in which both the bearings C and D are located on the same side of the pump with respect to the pump rotor F that is integral with the rotatable shaft A.

Figure 5b illustrates a second embodiment of the prior art in which the bearings C and D' are located at the opposed ends of the pump rotor F that is integral with the rotatable shaft A.

In Figures 5a and 5b the arrow 8 shows the inlet direction of the gas into the pump.

It is further known using turbomolecular pumps in the field of integrated circuits manufacturing.

In the manufacturing of integrated circuits there are employed gas mixtures such as, for example, HCl, HBr, Cl₂, Fl₂, NH₃, etc...., that are corrosive, as it is well known.

One of the main drawbacks araising in the use of turbomolecular pumps in the manufacturing of integrated circuits stems from the fact that a not negligible amount of the gas is being accumulated by diffusion through the pumping stages.

As a consequence, the surfaces of the pump internal components, and mainly the rotor bearings, are directly exposed to the corrosive attack of the above gas mixtures.

Therefore in order to prevent a quick damaging of the turbomolecular pumps used in the above applications, it has been necessary to work out especially designed pumps capable to withstand corrosive environments that are known as corrosion-resistant or " CP" (Corrosion Proof) pumps.

In the above type of pumps a flow of inert gas is forced into the space housing the bearings to set up a barrier preventing the entrance of corrosive substances that are produced in the integrated circuits manufacturing process.

It is therefore a first object of the present invention to realize an additional protective barrier against the corrosive action on the bearings of the rotor shaft by the gases on which the pump operates.

This object of the present invention is accomplished through a bearing assemby as claimed in claim 1.

As an alternative to the mechanical bearings, it is further known the use of magnetic bearings as rotatable supports for the shaft of a vacuum pump.

The use of magnetic bearings for rotatably supporting the shaft of a turbomolecular pump has howver the drawback of requiring a costant electric feeding of the magnetic bearings during the rotation of the pump.

Namely, should the electric power supply fail during the rotation of the pump rotor then the magnetic bearings rotatably supporting the shaft thereof would be abuptly deenergized. As a consequence the pump rotor would tend to its rest condition when rotating at its maximum speed, which is over 25.000 rpm as already mentioned, causing the breaking of the rotor bearings.

To prevent the breaking of the rotor supporting members, there is known the use of a battery and/or systems for converting the rotor kinetic energy into electric energy to feed the magnetic bearings until the pump rotor has been stopped even without a power supply from the mains.

However the above solutions are quite complex and expensive both to be installed and to be handled. Moreover they do not afford enough reliability, for example, against a lack of power supply due to a fault in the feeding cables.

A known solution for preventing the breaking of the bearings provides for using auxiliary mechanical bearings that intervene only in conditions suc as an excessive applied load, a malfunction of the magnetic bearings, or when these latter are no longer fed, etc..

Said auxiliary bearings are commonly known as emergency or "backup" bearings and are generally positioned in accordance with the arrangements shown in the already described Figures 5a and 5b with reference to the prior art, leaving a gap between the rotatable ring of the backup supports and the rotor of the pump.

Such a gap allows the free rotation of the pump rotor when the magnetic bearings are working without interfering with the backup bearings.

The choice of these backup bearings is however particularly critical when the rotor of the pump rotates at very high speed.

Namely, upon the intervention of the backup bearings the sudden contact between the surfaces rotating at an extremely high speed with other that are stationary imparts high loading and very high accelerations to the rotating bodies, an generates a very large power dissipation that can cause a seizure between the mutually moving arts.

In order to overcome at least partially these drawbacks it is preferable to use backup bearings having a small size.

This can be the case for example in the embodiment shown in Figure 5b where one of the two bearings is housed in the rotor of the vacuum pump.

However this known approach only partially solves the above problem and brings about the additional disadvantage of requiring a complex system for securing the bearing located within the rotor that partially obstructs the pump suction inlet from which the gas to be pumped is admitted, as shown by arrow B in Figure 5b.

Moreover, even when such backup bearing positioned on the inlet side of the pump is not lubricated, it can pollute the volume to be pumped with dust and particles from the pump components' wear.

Another not negligible drawback of this solution comes from the fact that the backup bearing which is located on the pump side facing the volume to be pumped results in being highly exposed to the action of possible corrosive gases employed in the process so that it is quickly damaged by them.

Another category of pumps is disclosed in US 4 023 920, EP 0 333 200, US 3 168 978 and US 5 033 936.

These pumps incorporate a cylindrical rotor equipped with a plurality of parallel rotor disks which, instead of being supported by a rotatable shaft, comprises a cavity for housing a journal integral with the body of the pump and bearing units interposed between said journal outer surface and the rotor inner surface.

It is therefore a second object of the present invention to realize small-size auxiliary bearings that are free from the above described drawbacks.

This second object of the present invention is achieved through a bearing assembly as claimed in claim 2.

Additional objects of the invention are accomplished by a bearing assembly as claimed in the dependent claims.

Further characteristics and advantages of the invention will be better understood from the following description of a preferred but non esclusive embodiment of the invention, only illustrated in the accompanying Figures in which:
Figure 1a is a partial sectional view of a vacuum pump illustrating the positioning of the rotatable bearings in accordance with a first embodiment of the invention;
Figure 1b is a partial sectional view of a vacuum pump illustrating the positioning of the rotatable bearings in accordance with a second embodiment of the invention;
Figure 2a is a partial sectional view of a vacuum pump illustrating the positioning of the rotatable bearings in accordance with a third embodiment of the invention;
Figure 2b is a partial sectional view of a vacuum pump illustrating the positioning of the rotatable bearings in accordance with a fourth embodiment of the invention;
Figure 3 is a partial sectional view of a vacuum pump illustrating the positioning of the rotatable bearings in accordance with a fifth embodiment of the invention;
Figure 4a is a partial sectional view of a vacuum pump illustrating the axial restraining means in accordance with a first embodiment;
Figures 4b is a partial sectional view of a vacuum pump illustrating the axial restraining means in accordance with a second embodiment;
Figure 4c is a partial sectional view of a vacuum pump illustrating the axial restraining means in accordance with a third embodiment;
Figure 5a is a partial sectional view of a vacuum pump illustrating the positioning of the rotatable bearings in accordance with a first embodiment of the prior art;
Figure 5b is a partial sectional view of a vacuum pump illustrating the positioning of the rotatable bearings in accordance with a second embodiment of the prior art.

With reference to Figure 1a a rotatable bearing assembly according to the present invention comprises a journal member 1, removably secured to the base 13 of the body of a vacuum pump and surrounded by a rotatable hollow shaft 2 having a substantially cylindrical inner cavity 14, to which the rotor 3 (only partially shown in the figure) is firmly secured, and a pair of ball (or roll) bearings 4 and 5 interposed between the journal 1 and the inner surface of the cylindrical cavity 14 of the shaft 2 housing the journal 1.

The bearings 4 and 5 are kept in the desired position on the supporting journal 1 by two sleeve collars 6 and 7, fastened at the opposed ends of the journal 1, near the closed end and the open end (or base) of hollow shaft 2, respectively, and by a sleeve 8 positioned between the bearings 4 and 5.

The sleeve 8 further accomplishes the purpose of strengthening and stiffening the journal 1 to prevent an excessive bending thereof that might bring the rotatable shaft 2 and the rotor 3 in contact with the pump stationary parts.

Axially restraining rings 9 and 10 are further provided that are partially received in annular radial grooves 11 and 12 of the inner cavity of the shaft 2 of the vacuum pump.

The axially restraining rings 9 and 10 prevent the disengagement of the shaft 2 from the journal 1 when this latter is rotated with respect to the former.

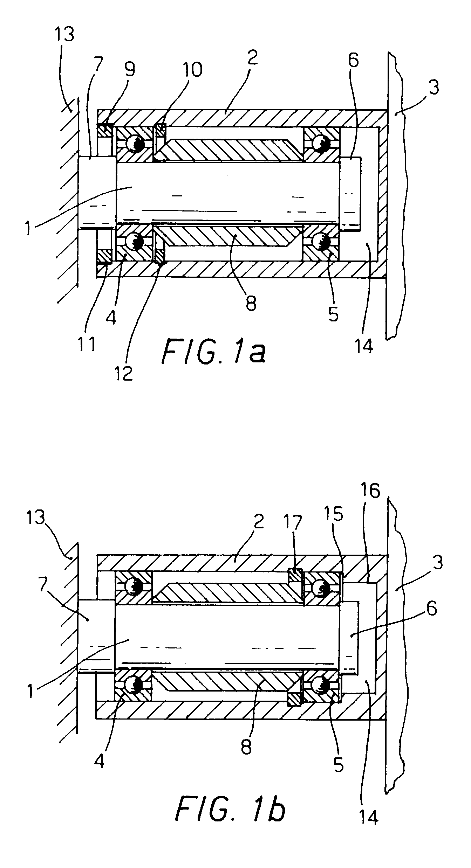

With reference to Figure 1b, there is shown another embodiment of the bearing assembly of the invention in which the cylindrical cross-section of the inner cavity 14 in the rotatable shaft 2 is narrower (i.e. provided with a reduced diameter portion) 16 at the cavity end adjacent the free end of the journal 1 thus forming an abutting step or shoulder 15 for the ball bearing 5.

In the embodiment of Figure 1b the axial restraint of the shaft 2 with respect to the journal 1 is obtained through the cooperation between the shoulder 15 and a single sealing ring 17 that is partially received in an annular radial groove provided within the cylindrical cavity of the shaft 2.

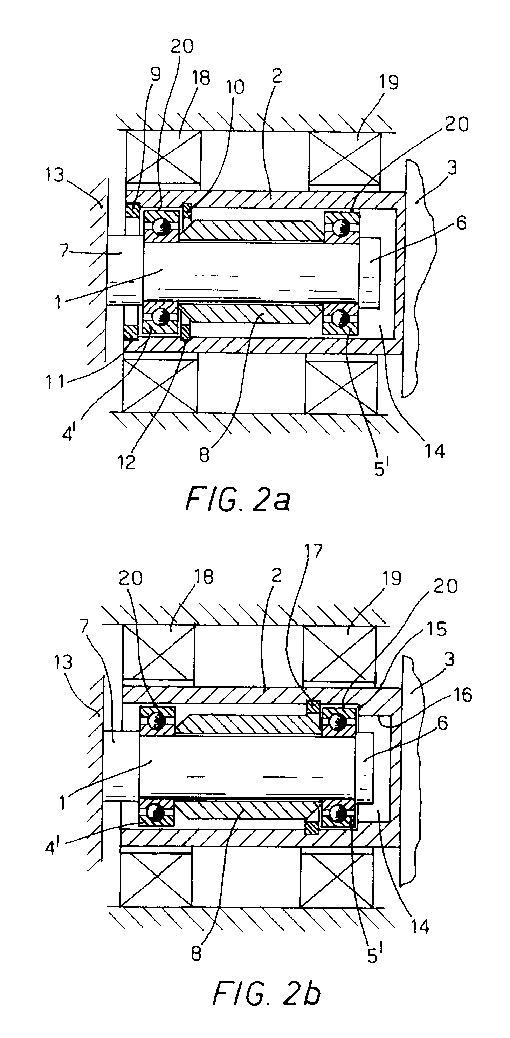

In Figures 2a and 2b it is shown a further embodiment of the bearing assembly of the present invention in which the main means for rotatably supporting the shaft 2 comprises magnetic bearings, schematically represented in Figures 2a and indicated by the references 18 and 19, while the mechanical bearings assembly 4', 5' acts as an auxiliary supporting means.

In the embodiments shown in Figures 2a and 2b, a gap 20 is formed between the auxiliary bearings 4' and 5' and the shaft 2 for allowing an unhindered rotation of the shaft 2 with respect of the auxiliary bearings 4' and 5' when the main magnetic bearings 18 and 19 are opering, while allowing the contact of the inner surface of the cavity 14 of the shaft 2 with the auxiliary bearings 4' and 5' in case of failure of the magnetic bearings 18 and 19 or when they are subjected to an excessive load.

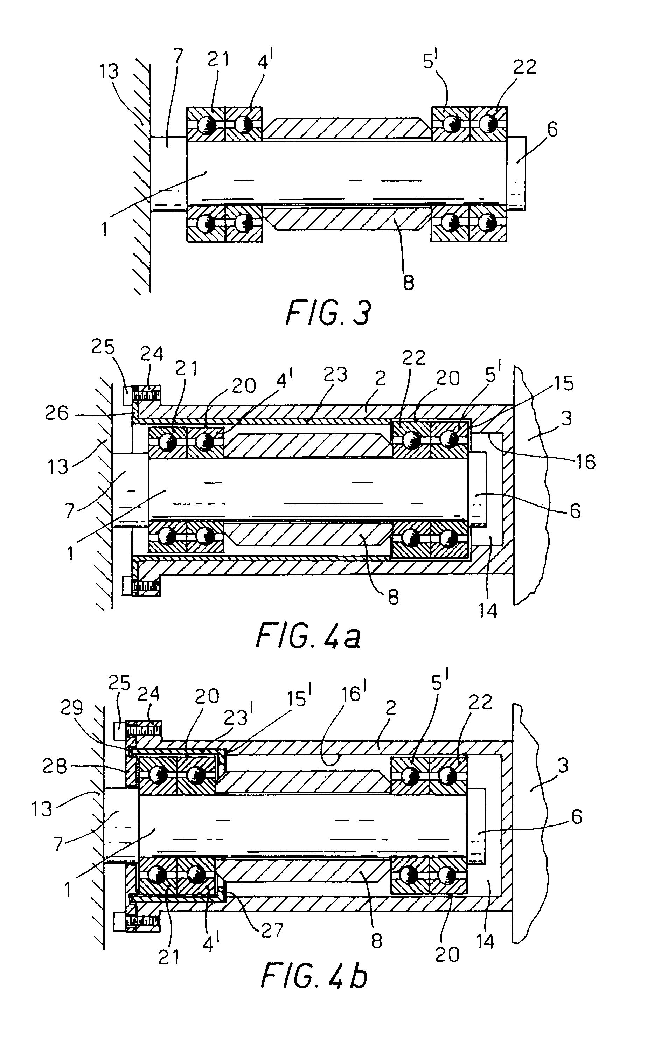

Figure 3 illustrates a further embodiment of the invention in which the bearings 4' and 5' are coupled with the bearings 21 and 22, respectively, in order to obtain an axial preloading.

The axial preloading of the auxiliary bearings 4' and 5' 2 is useful both for a more precise restraint of the rotor in case of contact with the auxiliary bearings 4' and 5' and for preventing a damage of the auxiliary bearings 4' and 5' because of the position that the rolling members could take with respect to the rolling races.

With reference to Figures 4a to 4c there are illustrated three embodiments of axial restraining means provided for preventing the withdrawal of shaft 2 from the journal 1.

The embodiments illustrated in Figures 4a to 4c relate to arrangements in which the bearings 4' and 5' operate as auxiliary bearings and are provided with an axial preloading, as in the case of Figure 3. However,the arrangements of Figures 4a to 4c can be used also in embodiments that do not provide an axial preloading and in which such bearings constitute the main supports of the pump shaft.

More particularly Figure 4a illustrates a first embodiment of the axial restraining means provided with a cylindrical sleeve 23, located in the cavity 14 of the shaft 2 between the outermost pair of bearings 4', 21 and the hollow rotor shaft 2 of the vacuum pump.

The free end of such cylindrical sleeve 23, located within the cavity 14 of the shaft 2, defines an axial stop shoulder to the innermost pair of bearings 5, 22 that prevents the withdrawal of the shaft 2 from the journal 1 carrying the bearings 4', 21, 5' and 22.

Moreover, the free end of the cylindrical sleeve 23 that protrudes ouside the shaft 2 has a rim 26 outwardly folded at 90° through which pass screws 25 for firmly fastening said rim 26 to a reinforcing rim 24 formed on the base of the shaft 2.

Figure 4b illustrates a second embodiment of the axial restraining means in which the narrowing 16' of the inner cavity 14 of the shaft 2 is located near the outermost (pair of) bearings 21 and 4', said narrowing 16' defining an abutment step 15' for a cylindrical sleeve 23' located within the cavity 14 of the shaft 2 between the bearings 4' and 21 and the rotor shaft 2 of the vacuum pump.

The free end of such clindrical sleeve 23' located within the cavity 14, has a rim 27 inwardly folded at 90° and defining an axial stop shoulder for the outermost bearings 4' and 21.

A cap 28, fixed by screws 25 to the reinforcement rim 24 provided on the base of the shaft 2, firmly presses the cylindrical sleeve 23' against the step formed by the shoulder 15' of the inner cavity 14 of the shaft 2 and prevents the withdrawal of the shaft 2 from the journal 1 on which there are mounted the bearings 4', 21, 5' and 22.

The surface of said cap 28 pressing the cylindrical sleeve 23' is further provided with a circular groove 29 for receiving the free end of said cylindrical sleeve 23'.

Figure 4c illustrates a third embodiment of the axial restraining means in which the inner cavity 14 of the shaft 2 has a first narrowing 16 and a second narrowing 16' positioned at the innermost bearings 5' and 22 and at the outermost bearings 4' and 21, respectively, and defining as many abutment steps 15 and 15', respectively.

A cylindrical sleeve 23", having a front portion with a small cross-section and a rear portion with a larger cross-section enters the cavity 14 of the shaft 2 between the bearings 4', 21 and the rotor shaft 2 of the vacuum pump.

With its free end located within the cavity 14 of the shaft 2, such cylindrical sleeve 23'' defines an axial stop shoulder for the innermost bearings 5', 22 preventing the withdrawal of the shaft 2 from the supporting journal 1 on which there are mounted the bearings 4', 21, 5' and 22.

At the free end remaining outside the shaft 2 such cylindrical sleeve 23'' is further provided with a rim 30 outwardly folded at 90°, through which pass screws 25 firmly securing the rim 30 to a reinforcement rim 24 provided on the base of the shaft 2.

When the bearings 4', 21, 5' and 22 are used as auxiliary supports, as it is illustrated in Figures 4a to 4c, a gap 20 is provided between the moving parts an the bearings 4', 21, 5' and 22 for allowing the free rotation of the shaft 2 with respect to the auxiliary bearings when the main magnetic supports are operating.

The embodiment of Figures 4c where the rear portion having a larger cross-section than the cylindrical sleeve 23'' is housed in the portion of the inner cavity 14 of the shaft 2 having a larger diameter, allows the mounting of larger outer bearings 4' and 21, in respect of the embodiment illustrated in Figure 4a, without requiring a thinner supporting journal 1 that would make weaker the area at which the supporting journal 1 is fixed to the body of the vacuum pump.

Still with reference to the embodiment illustrated in Figure 4c, the free end of the supporting journal 1 can have a narrowing 31 on which there are mounted innermost bearings 5' and 22 having the same or a smaller size than the outermost bearings.

From the above it is clear that thanks to the solution of the present invention the mechanical supports, both main or auxiliary supports, can have a small size, and since they are housed within the rotor shaft, they are kept separated from the pump zones where flows the gas to be pumped, so that they are protected against the gas corrosive action.

Any particles produced by the wearing of the mechanical bearings, either main or auxiliary, are in turn kept separated from the pumped volume.

A further advantage of the invention consists in that since the rotor shaft is partially hollow, it exhibits a larger resistance to bending stress and a smaller mass that increase the flexional stiffness/mass ratio as it is often useful for quick rotating rotors.

A not negligible advantage of the invention consists in that the supporting journal on which the bearings are mounted can easily be replaced by withdrawing it from the rotor shaft of the pump without any need of disassembling the shaft.

Moreover a more efficient heat dissipation is obtained by positioning the supporting journal on the base of the pump on that side that is opposed to the suction inlet side.

## Claims

1. A bearing assembly for supporting a rotor (3) of a vacuum pump, said pump being provided with a plurality of gas pumping stages formed by rotor disks, integral with said rotor, and stator rings, integral with the body of the vacuum pump, cooperating with each other, said rotor (3) being supported by a rotatable cylindrical shaft (2) having a radial dimension smaller than said rotor, characterized in that said bearing assembly comprises a pair of spaced apart bearing units (4,5; 4',5') mounted on a supporting journal (1) integral with the body of the pump, and in that said shaft (2) is provided with an axial cavity (14) within which said bearing units (4,5; 4',5') and supporting journal (1) are housed.

2. A bearing assembly as claimed in claim 1, characterized in that said bearing assembly further comprises main magnetic bearings (18,19) supporting the shaft (2) of the pump rotor and disposed outside said cavity (14) of the hollow shaft (2) and in that said pair of spaced apart bearing units (4,5; 4',5') act as auxiliary mechanical rotatable means which support the rotor (3) in case of failure of said magnetic bearings (18,19).

3. A bearing assembly as claimed in claim 1 or 2, characterized in that said rotatable supporting means (4,5) are interposed between the outer side surface of a supporting journal (1), integral with the body of the pump and substantially coaxial with the shaft (2) of the pump rotor (3), and the inner side surface of an axial cavity (14) of the shaft (2) of the pump rotor (3).

4. A bearing assembly as claimed in claim 3, characterized in that said supporting rotatable means (4.5) are formed by a plurality of ball or roll bearings.

5. A bearing assembly as claimed in claim 3, characterized in that said supporting rotatable means (4.5) are kept in position on the supporting journal (1) by blocking sleeve collars (6, 7).

6. A bearing assembly as claimed in claim 3, characterized in that said supporting journal (1) is provided with a stiffening sleeve (8) interposed between said supporting rotatable means (4, 5).

7. A bearing assembly as claimed in claim 3, characterized in that said axial cavity (14) in the shaft of the pump rotor has a radial narrowing (16) at the end of the cavity (14) forming an abutting step or shoulder (15) for the rotatable supporting means (4, 5) that is adjacent the free end of said journal (1).

8. A bearing assembly as claimed in claim 3, characterized in that said axial cavity (14) of said shaft (2) of the pump rotor (3) provides at least one radial annular groove (11, 12) partially housing an axially restraining ring (9, 10; 17) for said supporting rotatable means.

9. A bearing assembly as claimed in claim 3 when dependent from claim 2, characterized in that a gap (20) is provided between said auxiliary rotatable supporting means (4', 5') and said inner surface of the axial cavity (14) of the shaft (2) of the pump rotor (3).

10. A bearing assembly as claimed in claim 9, characterized in that said bearings are associated with axial preloading means (21, 22).

11. A bearing assembly as claimed in claim 10, characterized in that said axial preloading means (21, 22) comprises ball or roll bearings.

12. A bearing assembly as claimed in claim 3, characterized in that said axial cavity (14) of the shaft (2) of the pump rotor (3) has a substantially cylindrical shape.

13. A bearing assembly as claimed in claim 3, characterized in that said rotatable supporting assembly is mounted on the pump side that is opposed to the inlet side of the gas to be pumped.

14. A bearing assembly as claimed in claims 3, characterized in that it provides axial restraining means for said rotatable supporting means (4, 5; 4', 5'), formed by a sleeve (23; 23'; 23") disposed between the inner surface of the shaft (2) and the rotatable supporting means (4; 4', 21'), said sleeve (23; 23'; 23") being externally secured to the shaft (2) at the base thereof.

15. A bearing assembly as claimed in claim 14, characterized in that said sleeve (23') has a rim (27) inwardly folded by 90° and defining a shoulder for said rotatable supporting means (4, 5; 4', 5').

16. A bearing assembly as claimed in claim 14, characterized in that said sleeve (23") has a front portion with a small cross-section and a rear portion with a larger cross-section, and in that said axial cavity (14) has a first inner narrowing (16) and a second outer narrowing (16'), said smaller cross-section front portion of the sleeve (23") being housed within the axial cavity (14) at the first inner narrowing (16), and said larger cross-section rear portion of the sleeve (23") being housed within the axial cavity (14) at the second outer narrowing (16').

17. A bearing assembly as claimed in claims 3, characterized in that said supporting journal (1) is removable from the body of the vacuum pump.

18. A turbomolecular pump comprising a rotatable supporting assembly as claimed in claims 1 to 17.

## Patentansprüche

1. Lageranordnung für die Lagerung eines Rotors (3) einer Vakuumpumpe, welch besagte Pumpe mit einer Mehrzahl von Gas-Pumpstufen versehen ist, die durch mit dem genannten Rotor einstückige Rotorscheiben und durch mit dem Körper der Vakuumpumpe einstückige Statorringe gebildet sind, welche miteinander zusammenwirken, wobei besagter Rotor (3) durch eine drehbare zylindrische Welle (2) getragen ist, die eine kleinere radiale Abmessung als der besagte Rotor besitzt, dadurch gekennzeichnet, daß die genannte Lageranordnung ein Paar im Abstand voneinander befindliche Lagereinheiten (4, 5; 4', 5') aufweist, die auf einem Lagerzapfen (1) angeordnet sind, der mit dem Körper der Pumpe einstückig ist, und daß die genannte Welle (2) mit einem axialen Hohlraum (14) versehen ist, in dem die genannten Lagereinheiten (4, 5; 4', 5') und der Lagerzapfen (1) aufgenommen sind.

2. Lageranordnung wie in Anspruch 1 beansprucht, dadurch gekennzeichnet, daß die genannte Lageranordnung außerdem magnetische Hauptlager (18, 19) aufweist, die die Welle (2) des Pumpenrotors tragen und außerhalb des genannten Hohlraumes (14) der hohlen Welle (2) angeordnet sind, und daß das genannte Paar im Abstand voneinander befindlicher Lagereinheiten (4, 5; 4', 5') als mechanisches, drehbares Hilfsmittel wirkt, das den Rotor (3) im Falle eines Versagens der genannten magnetischen Lager (18, 19) abstützt.

3. Lageranordnung wie in Anspruch 1 oder 2 beansprucht, dadurch gekennzeichnet, daß das genannte drehbare Lagermittel (4, 5) zwischen die äußere Seitenfläche eines tragenden Lagerzapfens (1) eingefügt ist, der mit dem Körper der Pumpe einstückig ist und sich im wesentlichen koaxial zur Welle (2) des Pumpenrotors (3) und der inneren Seitenfläche eines axialen Hohlraums (14) der Welle (2) des Pumpenrotors (3) erstreckt.

4. Lageranordnung wie in Anspruch 3 beansprucht, dadurch gekennzeichnet, daß das genannte drehbare Lagermittel (4, 5) durch eine Mehrzahl von Kugel- oder Rollenlagern gebildet ist.

5. Lageranordnung wie in Anspruch 3 beansprucht, dadurch gekennzeichnet, daß das genannte drehbare Lagermittel (4, 5) auf dem Lagerzapfen (1) durch blockierende Hülsenringe (6, 7) in Stellung gehalten ist.

6. Lageranordnung wie in Anspruch 3 beansprucht, dadurch gekennzeichnet, daß der genannte Lagerzapfen (1) mit einer Versteifungshülse (8) versehen ist, die zwischen das genannte drehbare Lagermittel (4, 5) eingefügt ist.

7. Lageranordnung wie in Anspruch 3 beansprucht, dadurch gekennzeichnet, daß der genannte axiale Hohlraum (14) in der Welle des Pumpenrotors eine radiale Verengung (16) am Ende des Hohlraumes (14) besitzt, die eine Anschlagstufe oder -schulter (15) für das drehbare Lagermittel (4, 5) bildet, das dem freien Ende des genannten Lagerzapfens (1) benachbart ist.

8. Lageranordnung wie in Anspruch 3 beansprucht, dadurch gekennzeichnet, daß der genannte axiale Hohlraum (14) der genannten Welle (2) des Pumpenrotors (3) zumindest eine radiale Ringnut (11, 12) bildet, die einen axial sperrenden Ring (9, 10; 17) für das genannte drehbare Lagermittel teilweise aufnimmt.

9. Lageranordnung wie in Anspruch 3, in Abhängigkeit von Anspruch 2, beansprucht, dadurch gekennzeichnet, daß ein Spalt (20) zwischen dem genannten drehbaren Hilfslagermittel (4', 5') und der genannten Innenfläche des axialen Hohlraumes (14) der Welle (2) des Pumpenrotors (3) vorgesehen ist.

10. Lageranordnung wie in Anspruch 9 beansprucht, dadurch gekennzeichnet, daß die genannten Lager mit einem axialen Vorspannmittel (21, 22) in Verbindung sind.

11. Lageranordnung wie in Anspruch 10 beansprucht, dadurch gekennzeichnet, daß das genannte axiale Vorspannmittel (21, 22) Kugel- oder Rollenlager aufweist.

12. Lageranordnung wie in Anspruch 3 beansprucht, dadurch gekennzeichnet, daß der genannte axiale Hohlraum (14) der Welle (2) des Pumpenrotors (3) eine im wesentlichen zylindrische Form besitzt.

13. Lageranordnung wie in Anspruch 3 beansprucht, dadurch gekennzeichnet, daß die genannte drehbare Lagereinheit an derjenigen Pumpenseite angeordnet ist, die der Einlaßseite des zu pumpenden Gases entgegengesetzt ist.

14. Lageranordnung wie in Anspruch 3 beansprucht, dadurch gekennzeichnet, daß sie ein axiales Sperrmittel für das genannte drehbare Lagermittel (4, 5; 4', 5') vorsieht, das durch eine Hülse (23; 23'; 23") gebildet ist, die zwischen der inneren Oberfläche der Welle (2) und dem drehbaren Lagermittel (4; 4', 21') angeordnet ist, wobei genannte Hülse (23; 23'; 23") außenseitig an der Welle (2), an deren Fußteil, befestigt ist.

15. Lageranordnung wie in Anspruch 14 beansprucht, dadurch gekennzeichnet, daß die genannte Hülse (23') einen Rand (27) aufweist, der um 90° nach innen abgebogen ist und eine Schulter für das genannte drehbare Lagermittel (4, 5; 4', 5') definiert.

16. Lageranordnung wie in Anspruch 14 beansprucht, dadurch gekennzeichnet, daß die genannte Hülse (23") einen vorderen Teil mit einem kleinen Querschnitt und einen hinteren Teil mit einem größeren Querschnitt besitzt und daß der genannte axiale Hohlraum (14) eine erste innere Verengung (16) und eine zweite äußere Verengung (16') aufweist, wobei der genannte vordere Teil kleineren Querschnittes der Hülse (23') innerhalb des axialen Hohlraumes (14) an der ersten inneren Verengung (16) und der genannte hintere Teil größeren Durchschnitts der Hülse (23") innerhalb des axialen Hohlraumes (14) an der zweiten äußeren Verengung (16') gelegen sind.

17. Lageranordnung wie in Anspruch 3 beansprucht, dadurch gekennzeichnet, daß der genannte Lagerzapfen (1) vom Körper der Vakuumpumpe abnehmbar ist.

18. Turbomolekularpumpe mit einer drehbaren Lageranordnung wie in Ansprüchen 1 bis 17 beansprucht.

## Revendications

1. Ensemble de paliers pour supporter un rotor (3) d'une pompe à vide, ladite pompe étant munie d'une pluralité d'étages de pompage de gaz formés par des disques de rotor, solidaires dudit rotor, et des anneaux de stator, solidaires du corps de la pompe à vide, coopérant les uns avec les autres, ledit rotor (3) étant supporté par un arbre cylindrique rotatif (2) présentant une dimension radiale plus petite que ledit rotor, caractérisé en ce que ledit ensemble de paliers comprend une paire d'unités de paliers séparés (4, 5 ; 4', 5') montés sur un tourillon de support (1) solidaire du corps de la pompe, et en ce que ledit arbre (2) est prévu avec une cavité axiale (14) à l'intérieur de laquelle lesdites unités de paliers (4, 5 ; 4', 5') et ledit tourillon de support (1) sont logés.

2. Ensemble de paliers selon la revendication 1, caractérisé en ce que ledit ensemble de paliers comprend en outre des paliers magnétiques principaux (18, 19) supportant l'arbre (2) du rotor de pompe et disposés à l'extérieur de ladite cavité (14) de l'arbre creux (2) et en ce que ladite paire d'unités de paliers séparés (4, 5 ; 4', 5') agit comme moyens rotatifs mécaniques auxiliaires qui supportent le rotor (3) en cas de défaillance desdits paliers magnétiques (18, 19).

3. Ensemble de paliers selon la revendication 1 ou 2, caractérisé en ce que lesdits moyens de support rotatifs (4, 5) sont interposés entre la surface extérieure du tourillon de support (1), solidaire du corps de la pompe et sensiblement coaxial avec l'arbre (2) du rotor de pompe (3), et la surface interne d'une cavité axiale (14) de l'arbre (2) du rotor de pompe (3).

4. Ensemble de paliers selon la revendication 3, caractérisé en ce que lesdits moyens rotatifs de support (4, 5) sont formée par une pluralité de roulements à billes ou à rouleaux.

5. Ensemble de paliers selon la revendication 3, caractérisé en ce que lesdits moyens rotatifs de support (4, 5) sont maintenus en position sur le tourillon de support (1) par blocage de colliers à manchon (6, 7).

6. Ensemble de paliers selon la revendication 3, caractérisé en ce que ledit tourillon de support (1) est muni d'un manchon de raidissement (8) interposé entre lesdits moyens rotatifs de support (4, 5).

7. Ensemble de paliers selon la revendication 3, caractérisé en ce que ladite cavité axiale (14) dans l'arbre du rotor de pompe présente un rétrécissement radial (16) à l'extrémité de la cavité (14) formant un palier ou épaulement de butée (15) pour les moyens de support rotatifs (4, 5) qui est adjacent à l'extrémité libre dudit tourillon (1).

8. Ensemble de paliers selon la revendication 3, caractérisé en ce que ladite cavité axiale (14) dudit arbre (2) du rotor de pompe (3) procure au moins une rainure annulaire radiale (11, 12) recevant partiellement une bague de limitation axiale (9, 10 ; 17) pour lesdits moyens rotatifs de support.

9. Ensemble de paliers selon la revendication 3 lorsqu'elle est dépendante de la revendication 2, caractérisé en ce qu'un intervalle (20) est ménagé entre lesdits moyens de support rotatifs auxiliaires (4', 5') et ladite surface interne de la cavité axiale (14) de l'arbre (2) du rotor de pompe (3).

10. Ensemble de paliers selon la revendication 9, caractérisé en ce que lesdits paliers sont associés à des moyens de préchargement axiaux (21, 22).

11. Ensemble de paliers selon la revendication 10, caractérisé en ce que lesdits moyens de préchargement axiaux (21, 22) comprennent des roulements à billes ou à rouleaux.

12. Ensemble de paliers selon la revendication 3, caractérisé en ce que ladite cavité axiale (14) de l'arbre (2) du rotor de pompe (3) présente une forme sensiblement cylindrique.

13. Ensemble de paliers selon la revendication 3, caractérisé en ce que ledit ensemble de support rotatif est monté sur le côté pompe qui est opposé au côté entrée du gaz qui doit être pompé.

14. Ensemble de paliers selon la revendication 3, caractérisé en ce qu'il procure un moyen de limitation axiale pour ledit moyen de support rotatif (4, 5 ; 4', 5'), formé par un manchon (23 ; 23' ; 23") disposé entre la surface interne de l'arbre (2) et les moyens de support rotatifs (4 ; 4', 21'), ledit manchon (23 ; 23' ; 23") étant fixé de manière externe à l'arbre (2) au niveau de sa base.

15. Ensemble de paliers selon la revendication 14, caractérisé en ce que ledit manchon (23') comporte un rebord (27) replié vers l'intérieur sur 90° et définissant un épaulement pour lesdits moyens de support rotatifs (4, 5 ; 4', 5').

16. Ensemble de paliers selon la revendication 14, caractérisé en ce que ledit manchon (23") comporte une partie avant avec une section transversale petite et une partie arrière avec une section transversale plus grande, et en ce que ladite cavité axiale (14) présente un premier rétrécissement interne (16) et un second rétrécissement externe (16'), ladite partie avant à section transversale plus petite du manchon (23") étant logée à l'intérieur de la cavité axiale (14) au niveau du premier rétrécissement interne (16) et ladite partie arrière de section transversale plus grande du manchon (23") étant logée à l'intérieur de la cavité axiale (14) au niveau du second rétrécissement externe (16').

17. Ensemble de paliers selon la revendication 3, caractérisé en ce que ledit tourillon de support (1) est détachable du corps de la pompe à vide.

18. Pompe turbomoléculaire comprenant un ensemble de support rotatif selon les revendications 1 à 17.
